# EUROPEAN PATENT APPLICATION

(11) **EP 2 704 432 A2**
(43) Date of publication of application: **05.03.2014**
(21) Application number: 11789263.8
(22) Date of filing: 23.06.2011
(51) Int. Cl.: H04N 7/24

(54) **METHOD FOR VIDEO RECORDING OF A MOBILE TERMINAL DEVICE AND SYSTEM THEREOF**

(71) Applicant: Huawei Device Co., Ltd., Shenzhen, Guangdong 518129 (CN)
(72) Inventor: CHAO, Kangjie, Shenzhen Guangdong 518129 (CN)
(74) Representative: Haley, Stephen
(86) International application number: PCT/CN2011/076202
(87) International publication number: WO 2011/150884

(57) **Abstract**

A video recording method for mobile terminal, and a related apparatus and system are disclosed. The method includes: receiving a data signal which is in a motion-joint photographic experts group M-JPEG format and is output by a camera module, where an output time sequence of the data signal is consistent with an output time sequence of a luminance and chrominance YUV signal, and the data signal includes: an image signal and a video recording signal; if the received data signal is the image signal, performing video coding on the video recording signal sequentially, and storing video information obtained after the coding; and if the received data signal is the video recording signal, decoding the video recording signal, and outputting the decoded video recording signal to a display apparatus.

## Description

### TECHNICAL FIELD

The present invention relates to the field of a mobile terminal, and in particular, to a video recording method for a mobile terminal, and a related apparatus and system.

### BACKGROUND

An existing mobile terminal is generally equipped with a camera, and the mobile terminal processes, through a baseband chip in the mobile terminal, data obtained by the camera, so as to implement a photographing function. However, due to performance of the baseband chip, the mobile terminal does not necessarily support a video recording function while supporting the photographing function. For example, a baseband chip QSC6055 platform may maximally process data obtained by a camera of 130W pixels, and can only photograph, but does not support video recording. Relative to this type of baseband chip QSC6055, some baseband chips supporting the video recording function on the market are high in price, and are not suitable for the market of low-cost mobile terminals.

In the prior art, a digital signal processing (DSP, Digital Signal Processing) chip is added between a baseband chip not supporting the video recording function and a camera, and the DSP chip completes a corresponding image processing function, and then transmits processed data to the baseband chip through a bus, so as to implement the video recording function.

The solution in the prior art implements the video recording function, but a DSP chip and a peripheral auxiliary circuit need to be additionally added, an existing hardware architecture is changed a lot, and an added auxiliary device also results in an increase of a production cost of a mobile terminal.

### SUMMARY

Embodiments of the present invention provide a video recording method for a mobile terminal, and a related apparatus and system, which are used to implement a video recording function on a baseband chip not supporting video recording.

A video recording method for a mobile terminal provided in the present invention includes: receiving a data signal which is in a motion-joint photographic experts group M-JPEG format and is output by a camera module, where an output time sequence of the data signal is consistent with an output time sequence of a luminance and chrominance YUV signal, and the data signal includes: an image signal and a video recording signal; if the received data signal is the image signal, performing video coding on the video recording signal sequentially, and storing video information obtained after the coding; and if the received data signal is the video recording signal, decoding the video recording signal, and outputting the decoded video recording signal to a display apparatus.

A video recording method for a mobile terminal provided in the present invention includes: obtaining pixel information of video recording; and outputting a data signal in an M-JPEG format to a baseband chip according to the pixel information, where an output time sequence of the data signal is consistent with an output time sequence of a YUV signal, and the data signal includes: an image signal and a video recording signal.

A baseband chip provided in the present invention includes: a video receiving unit, configured to receive a data signal which is in an M-JPEG format and is output by a camera module, where an output time sequence of the data signal is consistent with an output time sequence of a YUV signal, and the data signal includes: an image signal and a video recording signal; a data identifying unit, configured to distinguish the data signal in the M-JPEG format, trigger a video recording storing unit if the received data signal is the image signal, and trigger a preview outputting unit if the received data signal is the video recording signal; the video recording storing unit, configured to: if the received data signal is the image signal, perform video coding on the video recording signal sequentially, and store video information obtained after the coding; and the preview outputting unit, configured to: if the received data signal is the video recording signal, decode the video recording signal, and output the decoded video recording signal to a display apparatus.

A camera module provided in the present invention includes: a pixel obtaining unit, configured to obtain pixel information of video recording; and a data outputting unit, configured to output a data signal in an M-JPEG format to a baseband chip according to the pixel information, where an output time sequence of the data signal is consistent with an output time sequence of a YUV signal, and the data signal includes: an image signal and a video recording signal.

It can be seen from the foregoing technical solutions that, the embodiments of the present invention have the following advantages: In the present invention, an output format of a camera is adjusted, so that the camera sends a motion-joint photographic experts group (M-JPEG, Motion-Joint Photographic Experts Group) data signal whose output time sequence is the same as that of a luminance and chrominance YUV signal to a baseband chip, and by utilizing a characteristic of the M-JPEG data signal that an image signal and a video recording signal are alternatively output, an obtained video recording signal is used as a preview image during video recording and transferred to a display apparatus, and meanwhile, an obtained image signal is stored and is used as video recording data, thereby implementing a video recording function. On the basis of existing hardware, in the present invention, the video recording function is implemented at a low cost by utilizing software modulation, so as to improve product competitiveness of a mobile terminal.

### BRIEF DESCRIPTION OF DRAWINGS

FIG. 1 is a schematic flow chart of a video recording method for a mobile terminal according to an embodiment of the present invention;
FIG. 2 is a schematic diagram of an output time sequence in a YUV format according to an embodiment of the present invention;
FIG. 3 is a schematic diagram of a data signal in an M-JPEG format according to an embodiment of the present invention;
FIG. 4 is another schematic flow chart of a video recording method for a mobile terminal according to an embodiment of the present invention;
FIG. 5 is another schematic flow chart of a video recording method for a mobile terminal according to an embodiment of the present invention;
FIG. 6 is a schematic structural diagram of a baseband chip according to an embodiment of the present invention; and
FIG. 7 is a schematic structural diagram of a camera module according to an embodiment of the present invention.

### DESCRIPTION OF EMBODIMENTS

Embodiments of the present invention provide a video recording method for a mobile terminal, and a related apparatus and system, which are used to implement a video recording function on a baseband chip not supporting video recording.

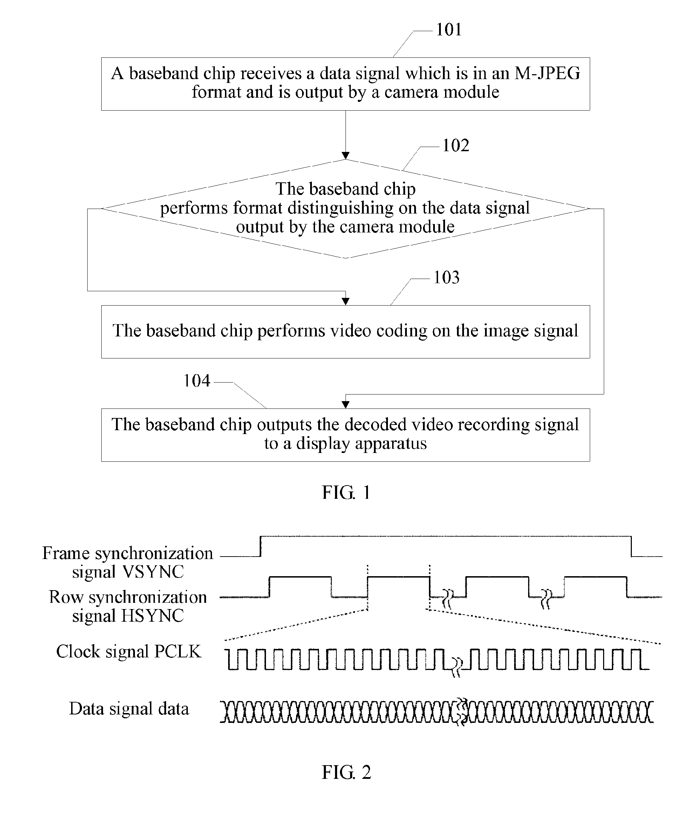

Referring to FIG. 1, an embodiment of a video recording method for a mobile terminal in an embodiment of the present invention includes:

101: A baseband chip receives a data signal which is in an M-JPEG format and is output by a camera module.

When a mobile terminal executes a video recording function, the baseband chip receives the data signal which is in the M-JPEG format and is output by the camera module, where an output time sequence of the data signal is consistent with an output time sequence of a YUV signal, and the data signal includes: an image signal and a video recording signal.

In a YUV model, "Y" represents luminance (Luminance or Luma), that is, a gray scale value, and "U" and "V" represent chrominance (Chrominance or Chroma), which function to describe a color and saturation of an image, and are used to specify a color of a pixel. For an output time sequence of a YUV signal, reference is made to FIG. 2, and the output time sequence of the YUV signal mainly includes an output time sequence of a clock signal, an output time sequence of a row synchronization signal and an output time sequence of a frame synchronization signal. In the figure, a VSYNC (Vertical Synchronization) signal is a synchronization signal for transmitting a frame of data, an HSYNC (Horizontal Synchronization) signal is a synchronization signal for transmitting a row of data, a PCLK is a data clock signal, and data is a YUV data signal; during data transmission, each VSYNC includes HSYNC signals the number of which corresponds to the number of rows in each frame of image of the size resolution, each HSYNC signal includes PCLKs the number of which corresponds to the number of pixels in each row of the size resolution, a pixel of data in a YUV format includes two PCLKs, and sending of data data is triggered at an edge of a PCLK signal; a resolution 320*240 is taken as an example, a VSYNC includes 240 HSYNCs, each HSYNC includes 320*2 PCLK signals, and data sampling is performed at an edge of a PCLK.

The M-JPEG format is a format for compressing motion and still images, and is widely applied to the field of nonlinear editing such as frame accurate editing and multi-layered image processing, where a motion video sequence is processed as consecutive still images, each frame is individually and completely compressed in this compression manner, each frame may be randomly stored in an editing procedure, frame accurate editing may be performed, and moreover, M-JPEG compression and decompression are symmetrical, and may be implemented by same hardware and software.

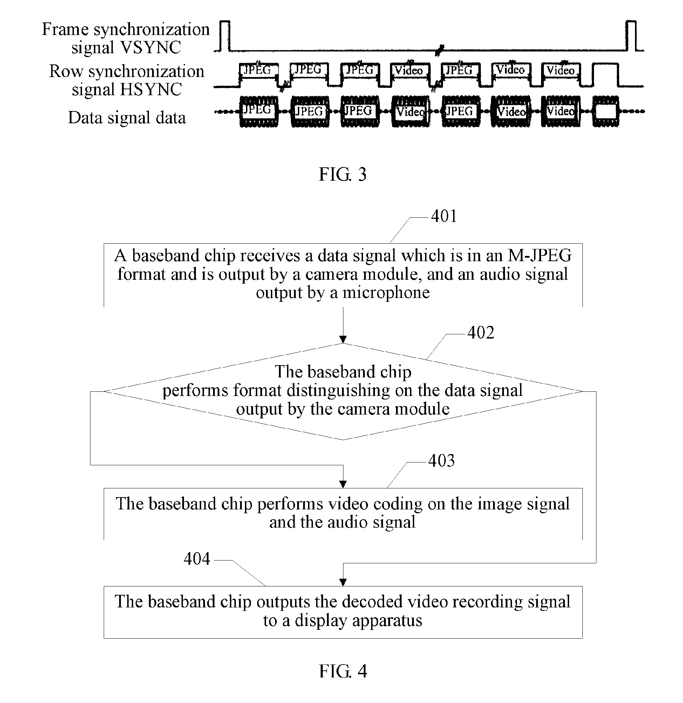

In the embodiment of the present invention, when the camera module obtains, through shooting, image data, the camera module compresses the image data into data in the M-JPEG format, and sends a data signal in the M-JPEG format to the baseband chip. Referring to FIG. 3, in the figure, "JPEG" represents an image signal, and "Video" represents a video recording signal. When a data signal in the M-JPEG format is output, an image signal in a consecutive frame may be mixed with a video recording signal; the video recording signal is in a YUV video format, and may be directly played; while the image signal is in a JPEG image format, and needs to be further compressed and converted into a playable video format.

102: The baseband chip performs format distinguishing on the data signal output by the camera module.

The baseband chip performs format distinguishing on the data signal which is in the M-JPEG format and is output by the camera module, and if the received data signal is an image signal, step 103 is executed; if the received data signal is a video recording signal, step 104 is executed.

103: The baseband chip performs video coding on the image signal.

The baseband chip performs video coding on the received image signal sequentially, and stores the coded video information.

If the received M-JPEG data signal is an image signal, the baseband chip may perform video coding on the image signal, convert the image signal into video information of video recording, and then save the obtained video information in a memory of the mobile terminal. The coded video information may be in an audio video interleaved (AVI, Audio Video Interleaved) format, may also be in a motion photographic experts group (JPEG, Joint Photographic Experts Group) format, and may also be in other general video play formats, which is not specifically limited here.

104: The baseband chip outputs the decoded video recording signal to a display apparatus.

The baseband chip decodes the received video recording signal, and outputs the decoded image signal to the display apparatus, so as to implement video preview of video recording.

If the received M-JPEG data signal is a video recording signal, the baseband chip may directly perform video decoding on the video recording signal; and at the same time when a user performs video recording, real-time video preview is implemented on the display apparatus of the mobile terminal, which is convenient for the user to shoot.

In the present invention, an output format of a camera is adjusted, so that the camera sends an M-JPEG data signal whose output time sequence is the same as that of a YUV signal to a baseband chip, and by utilizing a characteristic of the M-JPEG data signal that an image signal and a video recording signal are alternatively output, an obtained video recording signal is used as a preview image during video recording and transferred to a display apparatus, and meanwhile, an obtained image signal is stored and is used as video recording data, thereby implementing a video recording function. On the basis of existing hardware, in the present invention, the video recording function is implemented at a low cost by utilizing software modulation, so as to improve product competitiveness of a mobile terminal.

In the present invention, a video recording function is implemented, and voiced video recording may also be implemented simultaneously. Referring to FIG. 4, another embodiment of a video recording method for a mobile terminal in an embodiment of the present invention includes:

401: A baseband chip receives a data signal which is in an M-JPEG format and is output by a camera module, and an audio signal output by a microphone.

The baseband chip receives the data signal which is in the M-JPEG format and is output by the camera module and the audio signal output by the microphone simultaneously, where an output time sequence of the data signal is consistent with an output time sequence of a YUV signal, and the data signal includes: an image signal and a video recording signal.

At the same time when the camera module performs video recording, a speech path in the mobile terminal may also be opened simultaneously, and the microphone of the mobile terminal begins audio recording simultaneously, converts audio information obtained through the audio recording into an audio signal and sends the audio signal to the baseband chip, so that the baseband chip may implement voiced video recording.

402: The baseband chip performs format distinguishing on the data signal output by the camera module.

The baseband chip performs format distinguishing on the data signal which is in the M-JPEG format and is output by the camera module, and if the received data signal is an image signal, step 403 is executed; if the received data signal is a video recording signal, step 404 is executed.

403: The baseband chip performs video coding on the image signal and the audio signal.

The baseband chip extracts, according to clock information of the received image signal, an audio signal whose recording time is the same, sequentially adds a synchronization identifier to an image signal and an audio signal whose recording time is the same, performs video coding on the image signal and the audio signal according to the synchronization identifier, and stores the coded image signal and audio signal.

If the received M-JPEG data signal is an image signal, the baseband chip may perform video coding on the image signal and an audio signal corresponding to the image signal, convert the image signal and the audio signal corresponding to the image signal into video information of video recording, and then save the obtained video information in a memory of the mobile terminal. The coded video information may be in an audio video interleaved (AVI, Audio Video Interleaved) format, may also be in a motion photographic experts group (MJPEG, Move Joint Photographic Experts Group) format, and may also be in other general video play formats, which is not specifically limited here.

404: The baseband chip outputs the decoded video recording signal to a display apparatus.

The baseband chip decodes the received video recording signal, and outputs the decoded image signal to the display apparatus, so as to implement video preview of video recording.

If the received M-JPEG data signal is a video recording signal, the baseband chip may directly perform video decoding on the video recording signal; and at the same time when a user performs video recording, real-time video preview is implemented on the display apparatus of the mobile terminal, which is convenient for the user to shoot.

In the embodiment of the present invention, on a condition that the mobile terminal has a speech path (including: a microphone and an audio processing apparatus), the present invention further achieves a voiced video recording mode, so as to enrich a media function of the mobile terminal.

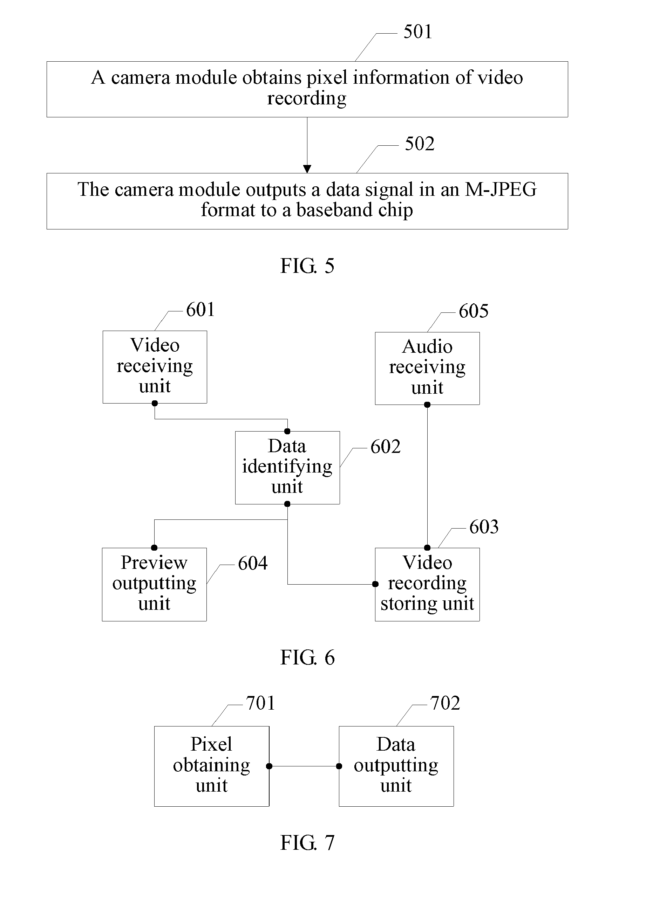

The foregoing describes a video recording method for a mobile terminal in an embodiment of the present invention from the perspective of a baseband chip, and the following describes a video recording method for a mobile terminal in an embodiment of the present invention from the perspective of a camera module. Referring to FIG. 5, another embodiment of a video recording method for a mobile terminal in an embodiment of the present invention includes:

501: A camera module obtains pixel information of video recording.

The camera module obtains pixel information which is for performing video recording and is set by a user. The pixel information includes: a resolution used during video recording, such as 320×240.

In the embodiment of the present invention, when the user performs video recording, a mobile terminal may provide various resolution selections for the user, and after the user determines that a certain resolution is selected and used, the camera module performs video recording according to the resolution selected by the user. If the user performs no selection operation before performing video recording, the camera module performs video recording according to a default resolution. However, the mobile terminal may provide resolution types and magnitude of a highest resolution, which are decided by performance of the camera module and a baseband chip, and are not specifically limited here.

502: The camera module outputs a data signal in an M-JPEG format to the baseband chip.

The camera module outputs the data signal in the M-JPEG format to the baseband chip according to the pixel information, where an output time sequence of the data signal is consistent with an output time sequence of a YUV signal, and the data signal includes: an image signal and a video recording signal.

After the pixel information for performing video recording is obtained, the camera module may perform shooting, obtain, through shooting, image data, perform, according to the pixel information, image processing on the image data obtained through shooting, convert the image data into a data signal which is in the M-JPEG format and conforms to the pixel information, and then output the data signal in the M-JPEG format to the baseband chip.

In the embodiment of the present invention, the camera module supports conversion of data in the M-JPEG format. In an actual application, a camera module supporting a function of conversion of data in the M-JPEG format may be selected, and software setting may also be performed on a camera module originally not having a function of conversion of data in the M-JPEG format, so that the camera module has the function of conversion of data in the M-JPEG format.

In an actual application, generally when a data signal in the M-JPEG format is output, an image signal and a video recording signal are not strictly and alternatively output, so that when video recording is performed actually, a preview effect and a final video recording effect are inconsistent, or even picture tearing occurs seriously. In the present invention, the camera module is modulated, so that the camera module alternatively outputs an image signal and a video recording signal frame by frame, and therefore, the video recording effect and the preview effect are kept consistent as much as possible, so as to improve video recording quality.

The following describes an embodiment of a baseband chip of the present invention which is configured to execute the foregoing video recording method for a mobile terminal, and for its logical structure, reference is made to FIG. 6. An embodiment of the baseband chip in the embodiment of the present invention includes:
a video receiving unit 601, configured to receive a data signal which is in an M-JPEG format and is output by a camera module, where an output time sequence of the data signal is consistent with an output time sequence of a YUV signal, and the data signal includes: an image signal and a video recording signal;
a data identifying unit 602, configured to distinguish the received data signal in the M-JPEG format, trigger a video recording storing unit 603 if the received data signal is the image signal, and trigger a preview outputting unit 604 if the received data signal is the video recording signal;
the video recording storing unit 603, configured to: if the received data signal is the image signal, perform video coding on the video recording signal sequentially, and store video information obtained after the coding; and
the preview outputting unit 604, configured to: if the received data signal is the video recording signal, decode the video recording signal, and output the decoded video recording signal to a display apparatus.

The baseband chip in the embodiment of the present invention may further includes:
an audio receiving unit 605, configured to receive an audio signal output by a microphone.

A specific interaction procedure of each unit of the baseband chip in the embodiment of the present invention is as follows:

When a mobile terminal executes a video recording function, the video receiving unit 601 receives a data signal which is in an M-JPEG format and is output by a camera module, where an output time sequence of the data signal is consistent with an output time sequence of a YUV signal, and the data signal includes: an image signal and a video recording signal. In the embodiment of the present invention, when the camera module obtains, through shooting, image data, the camera module compresses the image data into data in the M-JPEG format, and sends a data signal in the M-JPEG format to the baseband chip. For an output time sequence of a YUV signal, reference is made to FIG. 2, and the output time sequence of the YUV signal mainly includes an output time sequence of a clock signal, an output time sequence of a row synchronization signal and an output time sequence of a frame synchronization signal. In the figure, a VSYNC signal is a synchronization signal for transmitting a frame of data, an HSYNC signal is a synchronization signal for transmitting a row of data, a PCLK is a data clock signal, and data is a YUV data signal; during data transmission, each VSYNC includes HSYNC signals the number of which is the number of rows of the resolution size, each HSYNC signal includes PCLKs the number of which corresponds to the number of pixels in each row of the size resolution, a pixel of data in a YUV format includes two PCLKs, and sending of data data is triggered at an edge of a PCLK signal. Referring to FIG. 3, in the figure, "JPEG" represents an image signal, and "Video" represents a video recording signal. When a data signal in the M-JPEG format is output, an image signal in a consecutive frame may be mixed with a video recording signal; the video recording signal is in a YUV video format, and may be directly played; while the image signal is in a JPEG image format, and needs to be further compressed and converted into a playable video format.

Optionally, if a mobile apparatus has a speech path, the audio receiving unit 605 is also triggered to receive the audio signal output by the microphone at the same time when the video receiving unit 601 works.

After obtaining the foregoing data signal, the data identifying unit 602 distinguishes the received data signal in the M-JPEG format, triggers the video recording storing unit 603 if the received data signal is the image signal, and triggers the preview outputting unit 604 if the received data signal is the video recording signal.

If the received data signal is an image signal, the video recording storing unit 603 may perform video coding on the image signal and an audio signal corresponding to the image signal, convert the image signal and the audio signal corresponding to the image signal into video information of video recording, and then save the obtained video information in a memory of the mobile terminal. The coded video information may be in an AVI format, may be in an MJPEG format, and may also be in other general video play formats, which is not specifically limited here.

If the received M-JPEG data signal is a video recording signal, the preview outputting unit 604 may directly perform video decoding on the video recording signal; and at the same time when a user performs video recording, real-time video preview is implemented on the display apparatus of the mobile terminal, which is convenient for the user to shoot.

The following describes an embodiment of a camera module of the present invention which is configured to execute the foregoing video recording method for a mobile terminal, and for its logical structure, reference is made to FIG. 7. An embodiment of the camera module in the embodiment of the present invention includes:
a pixel obtaining unit 701, configured to obtain pixel information of video recording; and
a data outputting unit 702, configured to output a data signal in an M-JPEG format to a baseband chip according to the pixel information, where an output time sequence of the data signal is consistent with an output time sequence of a YUV signal, and the data signal includes: an image signal and a video recording signal.

A specific interaction procedure of each unit of the baseband chip in the embodiment of the present invention is as follows:

A head module of the pixel obtaining unit 701 obtains pixel information which is for performing video recording and is set by a user. The pixel information includes: a resolution used during video recording, such as 320×240. In the embodiment of the present invention, when the user performs video recording, a mobile terminal may provide various resolution selections for the user, and after the user determines that a certain resolution is selected and used, the camera module performs video recording according to the resolution selected by the user. If the user performs no selection operation before performing video recording, the camera module performs video recording according to a default resolution. However, the mobile terminal may provide resolution types and magnitude of a highest resolution, which are decided by performance of the camera module and a baseband chip, and are not specifically limited here.

After the pixel information for performing video recording is obtained, the data outputting unit 702 outputs the data signal in the M-JPEG format to the baseband chip, where an output time sequence of the data signal is consistent with an output time sequence of a YUV signal, and the data signal includes: an image signal and a video recording signal. In an actual application, generally when a data signal in the M-JPEG format is output, an image signal and a video recording signal are not strictly and alternatively output, so that when video recording is performed actually, a preview effect and a final video recording effect are inconsistent, or even picture tearing occurs seriously. In the present invention, the camera module is modulated, so that the data outputting unit 702 of the camera module alternatively outputs an image signal and a video recording signal frame by frame, and therefore, the video recording effect and the preview effect are kept consistent as much as possible, so as to improve video recording quality.

In the embodiments provided in the present application, it should be understood that the disclosed apparatuses and methods may be implemented through other manners. For example, the described apparatus embodiments are merely exemplary. For example, dividing of the units is merely a kind of logical function dividing, and there may be other dividing manners during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separated, and parts shown as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more than two units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such understanding, the technical solutions of the present invention essentially, or the part contributing to the prior art, or all or a part of the technical solutions may be embodied in a form of a software product. The computer software product is stored in a storage medium, and includes several instructions for instructing a computer device (which may be a personal computer, a server, or a network device, or the like) to perform all or a part of the steps of the methods described in the embodiments of the present invention. The foregoing storage medium includes: any medium that is capable of storing program codes, such as a USB flash disk, a removable hard disk, a read-only memory (ROM, Read-Only Memory), a random access memory (RAM, Random Access Memory), a magnetic disk, or an optical disk.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A video recording method for a mobile terminal, comprising:
receiving a data signal which is in a motion-joint photographic experts group M-JPEG format and is output by a camera module, wherein an output time sequence of the data signal is consistent with an output time sequence of a luminance and chrominance YUV signal, and the data signal comprises: an image signal and a video recording signal;
if the received data signal is the image signal, performing video coding on the video recording signal sequentially, and storing video information obtained after the coding; and
if the received data signal is the video recording signal, decoding the video recording signal, and outputting the decoded video recording signal to a display apparatus.

2. The method according to claim 1, wherein
the method further comprises:
receiving an audio signal output by a microphone; and
the performing video coding on the image signal sequentially, and storing video information obtained after the coding comprises:
adding a synchronization identifier for the image signal and the audio signal according to clock information of the image signal and the audio, and performing video coding on the image signal and the audio signal according to the synchronization identifier; and
storing the coded image signal and audio signal.

3. The method according to claim 1 or 2, wherein the output time sequence comprises:
an output time sequence of a clock signal, an output time sequence of a row synchronization signal and an output time sequence of a frame synchronization signal.

4. A video recording method for a mobile terminal, comprising:
obtaining pixel information of video recording; and
outputting a data signal in an M-JPEG format to a baseband chip according to the pixel information, wherein an output time sequence of the data signal is consistent with an output time sequence of a YUV signal, and the data signal comprises: an image signal and a video recording signal.

5. The method according to claim 4, wherein the outputting a data signal in an M-JPEG format to a baseband chip according to the pixel information comprises:
alternatively outputting the image signal and the video recording signal that are in the M-JPEG format to the baseband chip according to the pixel information.

6. The method according to claim 4 or 5, wherein the output time sequence comprises:
an output time sequence of a clock signal, an output time sequence of a row synchronization signal and an output time sequence of a frame synchronization signal.

7. A baseband chip, comprising:
a video receiving unit, configured to receive a data signal which is in an M-JPEG format and is output by a camera module, wherein an output time sequence of the data signal is consistent with an output time sequence of a YUV signal, and the data signal comprises: an image signal and a video recording signal;
a data identifying unit, configured to distinguish the data signal in the M-JPEG format, trigger a video recording storing unit if the received data signal is the image signal, and trigger a preview outputting unit if the received data signal is the video recording signal;
the video recording storing unit, configured to: if the received data signal is the image signal, perform video coding on the video recording signal sequentially, and store video information obtained after the coding; and
the preview outputting unit, configured to: if the received data signal is the video recording signal, decode the video recording signal, and output the decoded video recording signal to a display apparatus.

8. The baseband chip according to claim 7, wherein the baseband chip further comprises:
an audio receiving unit, configured to receive an audio signal output by a microphone; and
the video recording storing unit is further configured to:
add a synchronization identifier for the image signal and the audio signal according to clock information of the image signal and the audio, and perform video coding on the image signal and the audio signal according to the synchronization identifier; and store the coded image signal and audio signal.

9. A camera module, comprising:
a pixel obtaining unit, configured to obtain pixel information of video recording; and
a data outputting unit, configured to output a data signal in an M-JPEG format to a baseband chip according to the pixel information, wherein an output time sequence of the data signal is consistent with an output time sequence of a YUV signal, and the data signal comprises: an image signal and a video recording signal.

10. The baseband chip according to claim 9, wherein the data outputting unit is further configured to:
alternatively output the image signal and the video recording signal that are in the M-JPEG format to the baseband chip according to the pixel information, wherein the output time sequence of the data signal is consistent with the output time sequence of the YUV signal.
